# EUROPEAN PATENT APPLICATION

(11) **EP 2 899 796 A1**
(43) Date of publication of application: **29.07.2015**
(21) Application number: 13839324.4
(22) Date of filing: 24.04.2013
(51) Int. Cl.: H01M 10/60, H01M 2/02, H01M 2/04, H01M 2/08, H01M 2/10

(54) **SECONDARY BATTERY DEVICE AND SECONDARY BATTERY SYSTEM**

(30) Priority: 19.09.2012 JP 2012205240
(71) Applicant: Kabushiki Kaisha Toshiba, Minato-ku Tokyo 105-8001 (JP)
(72) Inventor: ENOMOTO, Takashi, Tokyo 105-8001 (JP); SEKINO, Masahiro, Tokyo 105-8001 (JP); MIYAMOTO, Hidenori, Tokyo 105-8001 (JP); KOSUGI, Shinichiro, Tokyo 105-8001 (JP)
(74) Representative: Bokinge, Ole
(86) International application number: PCT/JP2013/062010
(87) International publication number: WO 2014/045628

(57) **Abstract**

According to an embodiment, a secondary battery apparatus includes an outer case (24) including an airtight battery storing chamber (24a) formed inside, a coolant inlet (21) for supplying an insulative liquid coolant (27) to the battery storing chamber, and a coolant outlet (22) for discharging the liquid coolant from the battery storing chamber; and a battery cell (23) including an electrode terminal, the battery cell being disposed in the battery storing chamber of the outer case and immersed in the liquid coolant filled in the battery storing chamber.

## Description

### Technical Field

Embodiments described herein relate generally to a secondary battery apparatus and a secondary battery system.

### Background Art

Battery cells, which are stored in a secondary battery apparatus, produce heat by being charged/discharged. In a case of operating the secondary battery apparatus at a high rate, the amount of heat produced from the battery cells increases. It is thus necessary to cool the battery cells in accordance with the heat production of the battery cells. As a general cooling method, heat removal by air cooling is thought. However, air cooling has a problem that the cooling capability is low. In addition, as another cooling method, there is thought a method in which a water cooling jacket is disposed within the secondary battery apparatus or on the outer surface of the apparatus, and cooling water is circulated in the water cooling jacket.

### Citation List

### Patent Literature

Patent document 1: Jpn. Pat. Appln. KOKAI Publication No. 2000-251953
Patent document 2: Jpn. Pat. Appln. KOKAI Publication No. 2000-348781
Patent document 3: Jpn. Pat. Appln. KOKAI Publication No. H6-215804

### Summary of Invention

### Technical Problem

In the above-described cooling method, however, battery cells, which are distant from the water cooling jacket, cannot fully be cooled, and a temperature distribution in the secondary battery apparatus becomes large. Thus, large temperature differences occur among the battery cells, and the charging/discharging capability of the secondary battery apparatus lowers, and the lifetime of charging/discharging of the secondary battery apparatus considerably decreases. In addition, when water cooling jackets are disposed close to the battery cells, the number of water cooling jackets increases, the size of the secondary battery apparatus increases, the volume energy density of the secondary battery apparatus decreases, and the manufacturing cost increases.

This invention has been made in consideration of the above points, and the object of the invention is to provide a secondary battery apparatus and a secondary battery system, which can effectively cool battery cells, without increasing the size of the apparatus.

### Solution to Problem

A secondary battery apparatus according to an embodiment includes an outer case including an airtight battery storing chamber formed inside, a coolant inlet for supplying an insulative liquid coolant to the battery storing chamber, and a coolant outlet for discharging the liquid coolant from the battery storing chamber; and a battery cell including an electrode terminal, the battery cell being disposed in the battery storing chamber of the outer case and immersed in the liquid coolant filled in the battery storing chamber.

### Brief Description of Drawings

FIG. 1 is a cross-sectional view which schematically illustrates a secondary battery apparatus according to a first embodiment.
FIG. 2 is a perspective view illustrating a battery cell in the secondary battery apparatus.
FIG. 3 is a perspective view illustrating a bottom surface side of the battery cell.
FIG. 4 is a view which schematically illustrates a secondary battery system according to the first embodiment.
FIG. 5 is a cross-sectional view which schematically illustrates a secondary battery apparatus according to a second embodiment.
FIG. 6 is a cross-sectional view which schematically illustrates a secondary battery apparatus according to a third embodiment.
FIG. 7 is a perspective view illustrating a battery cell in the secondary battery apparatus according to the third embodiment.
FIG. 8 is a cross-sectional view which schematically illustrates a secondary battery apparatus according to a fourth embodiment.
FIG. 9 is a cross-sectional view which schematically illustrates a secondary battery apparatus according to a fifth embodiment.
FIG. 10 is a cross-sectional view which schematically illustrates a secondary battery apparatus according to a sixth embodiment.
FIG. 11 is a cross-sectional view which schematically illustrates a secondary battery apparatus according to a seventh embodiment.

### Description of Embodiments

Secondary battery apparatuses and secondary battery systems according to various embodiments will now be described in detail with reference to the accompanying drawings.

In a secondary battery apparatus according to an embodiment, battery cells are directly immersed in a liquid coolant with insulation properties, and the battery cells are cooled. A secondary battery system according to an embodiment is a system in which a liquid coolant is circulated in a secondary battery apparatus, thereby cooling battery cells which are stored in the secondary battery apparatus.

### (First Embodiment)

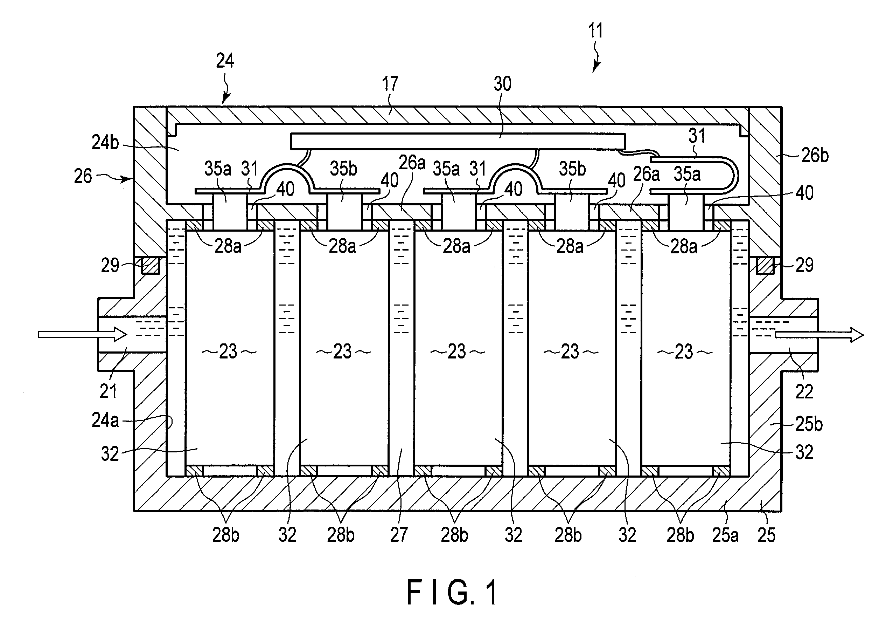

A secondary battery apparatus 11 according to a first embodiment is described. FIG. 1 is a cross-sectional view illustrating the secondary battery apparatus 11 according to the first embodiment.

The secondary battery apparatus 11 includes a box-shaped outer case 24; a liquid coolant 27 which is filled in the outer case; a plurality of battery cells (secondary batteries) 23 which are stored in the outer case and immersed in the liquid coolant 27; a cell monitoring unit (CMU) 30 which is disposed in the outer case and monitors the voltage and temperature of the battery cells; and a plurality of conductor members (bus bars) 31 which electrically connect the battery cells.

The outer case 24 includes a rectangular box-shaped body case 25 which is opened at its upper surface, and has a bottom; an upper case 26 which covers the opening of the upper surface of the body case 25; and a cover 17 covering the upper case. The body case 25 and upper case 26 are fabricated by, for example, an injection molding method, by using a synthetic resin with insulation properties, for example, a thermoplastic resin such as polycarbonate (PC) or polyphenylene ether (PPE). The cover 17 is formed of a relatively soft resin, for instance, polypropylene, so that the cover 17 can be easily attached/detached.

The body case 25 includes, as one piece, a rectangular bottom wall 25a, and a rectangular frame-shaped peripheral wall 25b which is erectly provided along each side of the bottom wall 25a. The bottom wall 25a is formed to have a size corresponding to a predetermined number of battery cells 23, for example, ten battery cells 23. The peripheral wall 25b is formed to have a height which is about 90% of the height of the battery cell 23. The body case 25 includes an upper opening through which the battery cells 23 can be passed.

The upper case 26 includes, as one piece, a ceiling wall 26a having substantially the same size and shape as the bottom wall 25a of the body case 25, and a rectangular frame-shaped peripheral wall 26b formed around the ceiling wall 26a. The upper case 26 is laid over the body case 25 from above, and is attached to the body case 25. Thereby, the outer case 24 having a rectangular box shape as a whole is constructed. Specifically, the upper case 26 is fixed such that a lower end edge of the peripheral wall 26b is abutted upon an upper end edge of the peripheral wall 25b of the body case 25. For example, an adhesive 29 is filled in an annular groove which is formed along the upper end edge of the peripheral wall 25b of the body case 25, and the upper end of the peripheral wall 25b and the lower end of the peripheral wall 26b are airtightly adhered by this adhesive 29. As the adhesive 29, an adhesive which, when dried, does not vary in volume is used, and the adhesive 29 functions also as a sealant for airtightly sealing the jointing part.

Incidentally, the fixation between the body case 25 and upper case 26 may be made by screwing, fastening by bolts, etc. In addition, a sealing member, such as an O-ring, may be inserted in the jointing part, thereby to maintain airtightness.

The ceiling wall 26a of the upper case 26 is opposed to the bottom wall 25a of the body case 25 such that the ceiling wall 26a is substantially in parallel to the bottom wall 25a. Thereby, in the outer case 24, an airtight battery storing chamber 24a for storing the battery cells and liquid coolant is formed between the bottom wall 25a of the body case 25 and the ceiling wall 26a of the upper case 26. In addition, the cover 17 having a rectangular plate shape is detachably attached to the upper opening of the upper case 26, and covers the upper opening of the upper case. Thereby, a conductor disposition chamber 24b for disposing the conductor members, CMU 30, etc. is formed between the ceiling wall 26a of the upper case 26 and the cover 17. The battery storing chamber 24a and the conductor disposition chamber 24b are airtightly partitioned by the ceiling wall 26a.

A plurality of openings 40 for insertion of electrode terminals of the battery cells 23, and a plurality of exhaust ports (not shown) are formed in the ceiling wall 26a of the upper case 26. Each of the openings 40 is formed to be slightly larger than the electrode terminal of the battery cell 23. The openings 40 are arranged and provided in four rows in the longitudinal direction of the ceiling wall 26a. The exhaust ports are arranged and formed in two rows in the longitudinal direction of the ceiling wall 26a, and each row is provided at a substantially central part between two rows of openings 40.

Furthermore, the outer case 24 includes a coolant inlet 21 and a coolant outlet 22 which communicate with the battery storing chamber 24a. The coolant inlet 21 is formed, for example, in the peripheral wall 25b of the body case 25, and is located on one end side in the longitudinal direction of the outer case 24. The coolant outlet 22 is formed, for example, in the peripheral wall 25b of the body case 25, and is located on the other end side in the longitudinal direction of the outer case 24. Specifically, the coolant inlet 21 and coolant outlet 22 are provided on both sides of the battery storing chamber, with the battery storing chamber 24a being interposed.

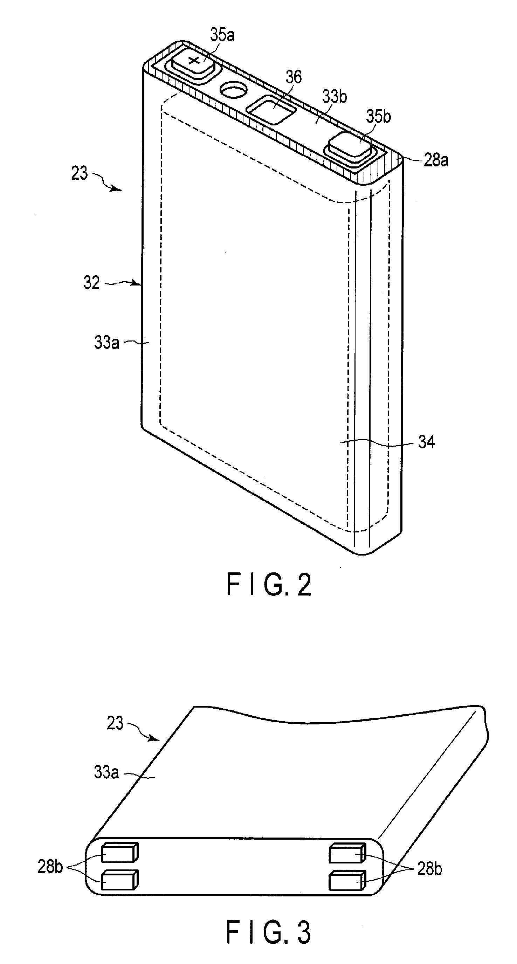

Next, the battery cell 23 is described. FIG. 2 is a perspective view illustrating the battery cell 23, as viewed from above. FIG. 3 is a perspective view illustrating a bottom side of the battery cell.

As the battery cell 23, for example, a nonaqueous electrolyte secondary battery, such as a lithium ion battery, is used. As illustrated in FIG. 2 and FIG. 3, the battery cell 23 includes a flat, rectangular box-shaped, outer container 32 which is formed of, e.g. aluminum, and an electrode body 34 which, together with the nonaqueous electrolyte, is contained in the outer container 32. The outer container 32 includes a container body 33a which is opened at its upper end, and a rectangular plate-shaped cover member 33b which is welded to the container body 33a and closes the opening of the container body 33a, and the inside of the outer container 32 is airtightly formed. The electrode body 34 is formed in a flat rectangular shape, for example, by winding a cathode plate and an anode plate in a spiral shape, with a separator being interposed therebetween, and also by compressing the wound cathode plate and anode plate in the diametrical direction.

A cathode terminal 35a and an anode terminal 35b are disposed at both end portions in the longitudinal direction of the cover member 33b, and project from the cover member 33b. The cathode terminal 35a and anode terminal 35b are connected to the cathode and anode of the electrode body 34, respectively. A pressure release valve 36, which functions as a gas exhaust mechanism, is formed at a central part of the cover member 33b. The pressure release valve 36 is formed to have about half the thickness of the cover member 33b. When gas occurs in the outer container 32 due to, for example, an abnormal mode of the battery cell 23, and the internal pressure of the outer container 32 rises to a predetermined value or more, the pressure release valve 36 is opened. By the opening of the pressure release valve 36, the pressure in the outer container 32 lowers, and breakage or the like of the outer container 32 is prevented.

As illustrated in FIG. 2, an adhesive 28a is applied to each battery cell 23 such that the adhesive 28a is provided around the peripheral edge of the cover member 33b. In addition, as illustrated in FIG. 3, an adhesive 28b is independently applied to a plurality of locations on the bottom surface of the outer container 32, for example, four corner portions.

As illustrated in FIG. 1, a plurality of battery cells 23 are disposed and stored in the battery storing chamber 24a of the outer case 24. The battery cells 23 are arranged in two rows each including five battery cells 23, and each battery cell 23 is disposed at predetermined distances from the inner surface of the peripheral wall 25b of the outer case 24 and from other battery cells 23. In each row, the five battery cells 23 are arranged in such a state that the major surfaces of the outer containers 32 face each other with a predetermined gap, and that the upper ends of the outer containers 32, on which the electrode terminals 35a and 35b are provided, face in the same direction. In addition, in each row, the battery cells 23 are disposed such that the width direction of the battery cells 23 are parallel to a direction perpendicular to the longitudinal direction of the outer case 24.

Two neighboring battery cells 23 are reversely disposed in opposite directions over 180° from each other, such that the cathode terminal 35a and anode terminal 35b neighbor each other. The battery cells 23 of the two neighboring rows are disposed such that the cathode terminal 35a of the battery cell 23 of one row and the anode terminal 35b of the battery cell 23 of the other row neighbor, and that the anode terminal 35b of the battery cell 23 of the one row and the cathode terminal 35a of the battery cell 23 of the other row neighbor. Incidentally, two neighboring battery cells 23 may be disposed in the same direction such that their cathode terminals 35a neighbor and their anode terminals 35b neighbor.

As regards each battery cell 23, the bottom of the outer container 32 is adhered and fixed to the inner surface of the bottom wall 25a of the outer case 24 by the adhesive 28b. Incidentally a double coated adhesive tape or the like may be substituted for the adhesive 28b. In addition, the cathode terminal 35a and anode terminal 35b of the battery cell 23 are passed through the openings 40 of the ceiling wall 26a, penetrate the ceiling wall 26a, and project into the conductor disposition chamber 24b. The upper end of the outer container 32 is adhered and fixed to the lower surface of the ceiling wall 26a by the adhesive 28a. Thereby, each battery cell 23 is aligned and fixed at a predetermined position in the battery storing chamber 24a. At this time, the adhesive 28a is adhered to the periphery of the opening 40, and effects airtight sealing between the battery storing chamber 24a and the opening 40. Thereby, the battery storing chamber 24a is kept airtight.

As illustrated in FIG. 1, a plurality of bus bars 31 serving as conductor members are disposed within the conductor disposition chamber 24b of the outer case 24. The plural battery cells 23 are electrically connected to each other by the bus bars 31, and are connected in series or in parallel. The bus bar 31 is formed by bending and forming an electrically conductive material, for instance, a metal plate of aluminum or the like. In two neighboring battery cells 23, the cathode terminals 35a and anode terminals 35b, which project into the conductor disposition chamber 24b, are mutually electrically connected by the bus bar 31. The bus bar 31 is electrically and mechanically connected to the electrode terminal of the battery cell 23 by, for example, laser welding, electron beam welding or resistance welding. In addition, of the plural bus bars 31, the bus bars 31, which are connected to the battery cells 23 located at both ends of the row, constitute a cathode-side output terminal and an anode-side output terminal of the secondary battery apparatus 11.

As illustrated in FIG. 1, the CMU 30 is composed of a rectangular control circuit board, and is disposed within the conductor disposition chamber 24b of the upper case 26. The CMU 30 is placed above the ceiling wall 26a, with an insulation sheet (not shown) being interposed, and covers most of the bus bars 31. The CMU 30 is fixed to a plurality of bosses, support ribs or the like (not shown), which are erectly provided on the ceiling wall 26a.

The CMU 30 is electrically connected to the respective battery cells 23 via the bus bars 31. The CMU 30 detects the voltage and temperature of each battery cell 23, and delivers information to a controller (not shown). In accordance with the voltage and temperature of each battery cell 23, which are delivered from the CMU 30, the controller controls the operation of the secondary battery apparatus 11, and prevents over-charge or over-discharge of the battery cells 23.

In the secondary battery apparatus 11 with the above-described structure, the liquid coolant 27 with electrical insulation properties, for instance, an insulation oil, a transformer oil, triphenyl phosphate, trioctyl phosphate, hydrofluoroether, or a fluorine-based inactive liquid, is filled in the battery storing chamber 24a of the outer case 24, and the battery storing chamber is filled with the liquid coolant 27. This liquid coolant 27 is supplied and filled in the battery storing chamber 24a from the coolant inlet 21, and is also discharged from the battery storing chamber 24a through the coolant outlet 22. Thereby, in the battery storing chamber 24a, the plural battery cells 23 are immersed in the liquid coolant 27 and are directly cooled by the liquid coolant. The liquid coolant 27 flows to the periphery of the outer container 32 of each battery cell 23, and further flows between the bottom of the outer container 32 and the bottom wall 25a of the outer case 24, thus directly cooling the battery cells 23 from their peripheries. At this time, since the battery storing chamber 24a is airtightly partitioned, the liquid coolant 27 does not flow or leak into the conductor disposition chamber 24b of the outer case 24, and the liquid coolant 27 does not come in contact with the bus bars 31 or CMU 30. Therefore, the CMU 30 can surely detect the temperature and voltage of the battery cells 23, without being hindered by the liquid coolant 27. At the same time, there is no need to seal the CMU 30, and the structure can be simplified.

Next, a description is given of a secondary battery system including the secondary battery apparatus with the above-described structure.

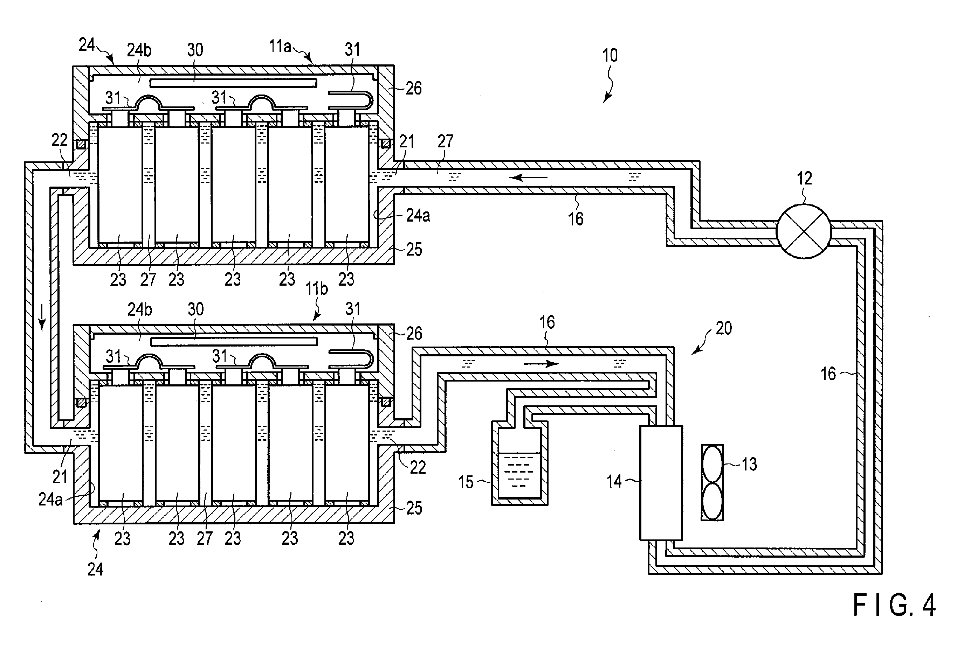

FIG. 4 illustrates a secondary battery system 10 according to the first embodiment. As illustrated in FIG. 4, the secondary battery system 10 includes at least one, for example, two secondary battery apparatuses 11a and 11b, and a circulation mechanism 20 for supplying and circulating a liquid coolant to these secondary battery apparatuses. The circulation mechanism 20 includes a pump 12, an air blower 13, a radiator 14, a reservoir tank 15, and a piping 16 for communication between these components and the secondary battery apparatuses 11a and 11b. In addition, the secondary battery system 10 includes a controller (not shown) which controls the operation of the circulation mechanism 20.

The secondary battery apparatuses 11a and 11b are constructed like the above-described secondary battery apparatus 11. In addition, in the example illustrated in FIG. 4, although the secondary battery system 10 includes two secondary battery apparatuses 11, namely secondary battery apparatuses 11a and 11b, the number of secondary battery apparatuses, which the secondary battery system 10 includes, is not limited to a specific number.

A discharge port of the pump 12 is connected to the coolant inlet 21 of the secondary battery apparatus 11a through the piping 16. In addition, a suction port of the pump 12 is connected to a discharge port of the radiator 14 through the piping 16. The pump 12 takes in the liquid coolant 27 from the discharge port of the radiator 14, and discharges the taken-in liquid coolant 27 to the coolant inlet 21 of the secondary battery apparatus 11a.

The coolant outlet 22 of the secondary battery apparatus 11a is connected to the coolant inlet 21 of the secondary battery apparatus 11b through the piping 16. The coolant outlet 22 of the secondary battery apparatus 11b is connected to an inlet of the radiator 14.

The reservoir tank 15 is disposed midway along the piping which connects the coolant outlet 22 of the secondary battery apparatus 11b and the inlet of the radiator 14. In addition, the battery storing chamber 24a of the secondary battery apparatus 11a, 11b and each piping 16 are filled with the liquid coolant 27. Besides, a part of the liquid coolant 27 is stored in the reservoir tank 15.

The air blower 13 is provided to be opposed to the radiator 14, and feeds a cooling wind to the radiator. The liquid coolant 27 passing through the radiator 14 is air-cooled by the cooling wind from the air blower 13 and by natural cooling. For example, a fan is used as the air blower 13, but the air blower 13 is not limited to a specific device. Incidentally, although each of the air blower 13 and radiator 14 is a cooling device for cooling the liquid coolant 27, the cooling device is not limited to a specific structure. For example, in the case where a sufficient cooling effect can be obtained by only the natural radiation of the radiator 14, the air blower may be omitted and only the radiator 14 may be provided as the cooling device.

The controller controls the overall operation of the secondary battery system 10. The controller is composed of a processor such as a CPU, various memories, and various interfaces. The controller may be composed of, for instance, a personal computer (PC).

The controller is connected to the respective components of the secondary battery system 10, such as the CMUs 30 of the secondary battery apparatuses 11a and 11b, the pump 12 and the air blower 13. The controller acquires various measurement data, etc. from the respective parts of the secondary battery system 10, and comprehensively controls the respective parts of the secondary battery system 10, based on the acquired various measurement data, etc.

In the secondary battery system 10 with the above-described structure, the pump 12 feeds the liquid coolant 27 from the discharge port into the piping 16 at a predetermined pressure. The fed-out liquid coolant 27 passes through the piping 16, and flows into the battery storing chamber 24a from the coolant inlet 21 of the secondary battery apparatus 11a. The liquid coolant 27 passes through the battery storing chamber 24a, absorbs heat from the battery cells 23 in the battery storing chamber, and cools the battery cells 23. Thereafter, the liquid coolant 27 is exhausted from the coolant outlet 22 of the secondary battery apparatus 11a to the piping 16.

The liquid coolant 27, which has been exhausted from the coolant outlet 22 of the secondary battery apparatus 11a, flows through the piping 16 into the battery storing chamber 24a of the secondary battery apparatus 11b from the coolant inlet 21 of the secondary battery apparatus 11b. The liquid coolant 27 passes through the battery storing chamber 24a, absorbs heat from the battery cells 23 in the battery storing chamber, and cools the battery cells 23. Thereafter, the liquid coolant 27 is exhausted from the coolant outlet 22 of the secondary battery apparatus 11b to the piping 16.

The liquid coolant 27, which has been exhausted from the coolant outlet 22 of the second battery apparatus 11b, flows into the radiator 14 through the piping 16. Then, after cooled by the radiator 14, the liquid coolant 27 is fed to the pump 12 through the piping 16, and the liquid coolant 27 is fed once again to the secondary battery apparatus 11a by the pump 12. By repeating this flow of the liquid coolant 27, the liquid coolant 27 circulates in the secondary battery apparatuses 11a and 11b, and continuously cools the battery cells 23.

If the amount of the liquid coolant 27 in the entirety of the secondary battery system 10 exceeds a predetermined amount, or if the pressure of the liquid coolant in the secondary battery system exceeds a predetermined value, a part of the liquid coolant 27 is fed from the piping 16 to the reservoir tank 15, and is recovered in the reservoir tank. In addition, if the amount of the liquid coolant 27 in the secondary battery system 10 becomes short of a predetermined amount, the liquid coolant 27 is replenished from the reservoir tank 15 into the system through the piping 16. Thereby, the amount of the liquid coolant 27 in the secondary battery system 10 is kept constant.

According to the secondary battery apparatus and secondary battery system 10 having the above-described structures, the water cooling jacket and the piping structure on its periphery are needless. Therefore, the structure can be simplified, the efficiency in assembly can be enhanced, and the manufacturing cost can be reduced. In addition, there is no need to provide the water cooling jacket in the secondary battery apparatus or on the outer surface of the secondary battery apparatus, and the apparatus can be reduced in size. Furthermore, by directly cooling the battery cells by the coolant, the cooling efficiency can be greatly improved, compared to air cooling. At the same time, battery cells, which cannot sufficiently be cooled by the water cooling jacket, can effectively be cooled.

As the liquid coolant with electrical insulation properties, for example, an insulation oil is used. Thereby, the problems of occurrence of rust and electrical conductivity, which arise from water cooling, can be solved. By the fixation of the battery cells by the adhesive, two functions, namely the ensuring of airtightness and the fixing of battery cells, can be achieved by the adhesive, and the volume energy efficiency can be improved. According to the present secondary battery system, by directly circulating the liquid coolant in the secondary battery apparatus, the secondary battery apparatus can effectively be cooled while the amount of use of the liquid coolant is reduced. Moreover, dew condensation in the secondary battery apparatus can also be prevented.

Next, secondary battery apparatuses according to other embodiments will be described. In the other embodiments to be described below, the same parts as in the above-described first embodiment are denoted by like reference numerals, and a detailed description thereof is omitted. Different parts from the first embodiment will mainly be described in detail.

### (Second Embodiment)

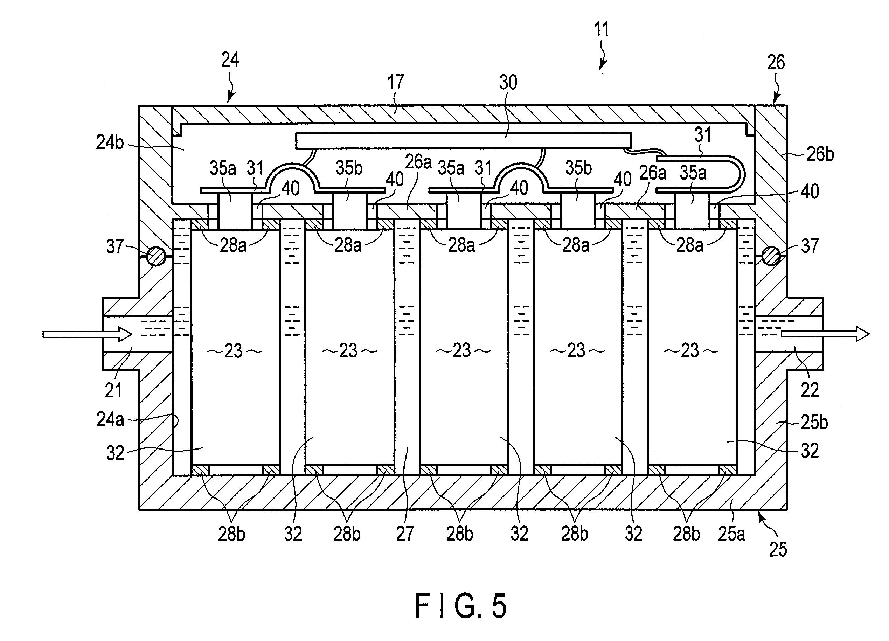

Next, a second embodiment is described. FIG. 5 is a cross-sectional view illustrating a secondary battery apparatus 11 according to the second embodiment.

The second embodiment differs from the first embodiment in that an O-ring 37 is used in place of the adhesive 29, as a sealing member for airtightly sealing a jointing part between the peripheral wall 25b of the body case 25 and the peripheral wall 26b of the upper case 26. In the second embodiment, the other structure of the secondary battery apparatus is the same as that of the secondary battery apparatus according to the first embodiment.

In a state in which the upper end edge of the peripheral wall 25b of the body case 25 and the lower end edge of the peripheral wall 26b of the upper case 26 are abutted upon each other, the body case 25 and upper case 26 are fastened with a bolt, and the O-ring 37 is interposed between the upper end edge of the peripheral wall 25b and the lower end edge of the peripheral wall 26b. The O-ring 37 is an elastic body, and is formed of a metal, synthetic resin, etc. The jointing parts of the body case 25 and upper case 26 are airtightly jointed by the O-ring 37.

### (Third Embodiment)

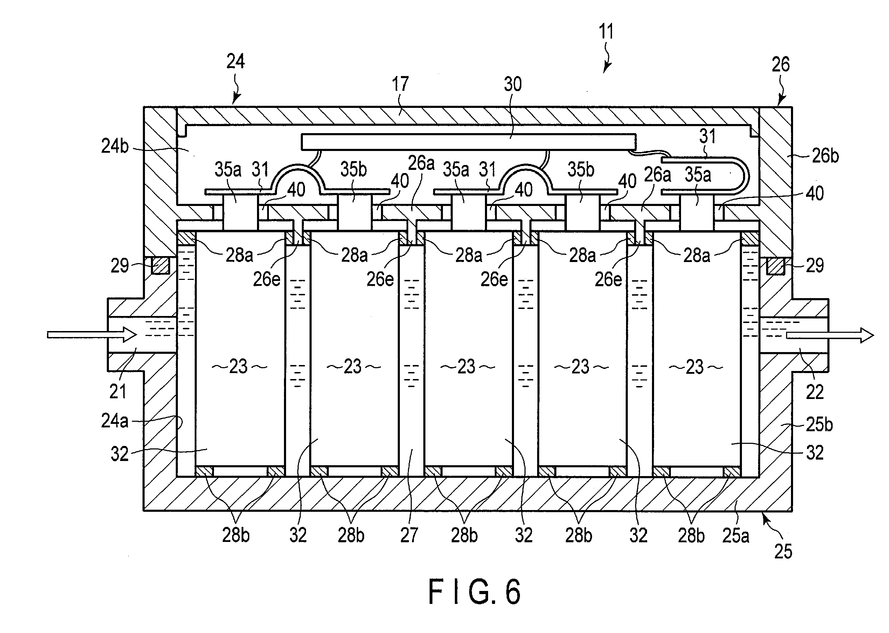

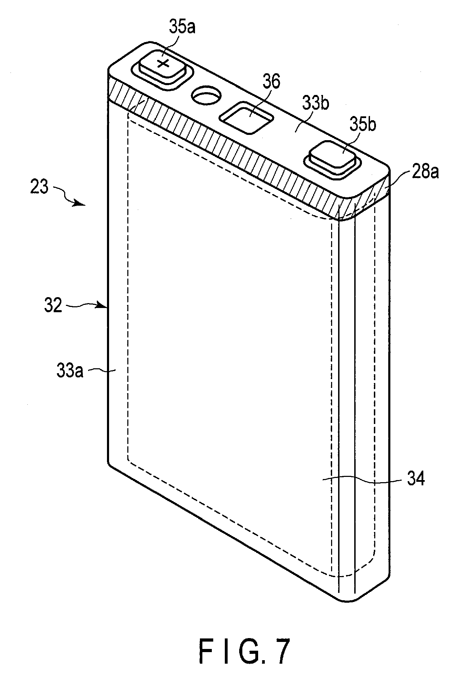

Next, a third embodiment is described. FIG. 6 is a cross-sectional view illustrating a secondary battery apparatus 11 according to the third embodiment. FIG. 7 is a perspective view of a battery cell, illustrating a state in which an adhesive is applied to the batter cell.

The third embodiment differs from the first embodiment with respect to the sealing structure between the ceiling wall 26a of the upper case 26 and each battery cell 23. In the third embodiment, the other structure of the secondary battery apparatus is the same as that of the secondary battery apparatus according to the first embodiment.

As illustrated in FIG. 6, the upper case 26 includes a plurality of fixing ribs 26e projecting from the lower surface of the ceiling wall 26a toward the battery storing chamber 24a. Each fixing rib 26e extends in a manner to surround the periphery of two openings 40 provided in the ceiling wall 26a. The fixing rib 26e is formed to have a height which is about 10% of the height of the outer container 32 excluding the terminals of the battery cell 23, and the fixing rib 26e faces the outer periphery of an upper end portion of each battery cell 23. In addition, parts of the fixing ribs, which are disposed at both ends in the longitudinal direction of the ceiling wall 26a, are formed by the peripheral wall of the upper case 26.

As illustrated in FIG. 6 and FIG. 7, the adhesive 28a is applied, with a predetermined width, around the outer periphery of the upper end portion of the outer container 32 of the battery cell 23. In addition, as illustrated in FIG. 6, the upper end portion of the outer container 32 of each battery cell 23 is airtightly adhered and fixed to the fixing rib 26e or the inner surface of the peripheral wall 26b by the adhesive 28a. Each battery cell 23 is aligned and fixed at a predetermined position within the battery storing chamber 24a, and, furthermore, the adhesive 28a effects airtight sealing between the battery storing chamber 24a and the opening 40. Thereby, the battery storing chamber 24a and the conductor disposition chamber 24b of the outer case 24 are formed as mutually independent spaces, and the battery storing chamber 24 is kept airtight.

### (Fourth Embodiment)

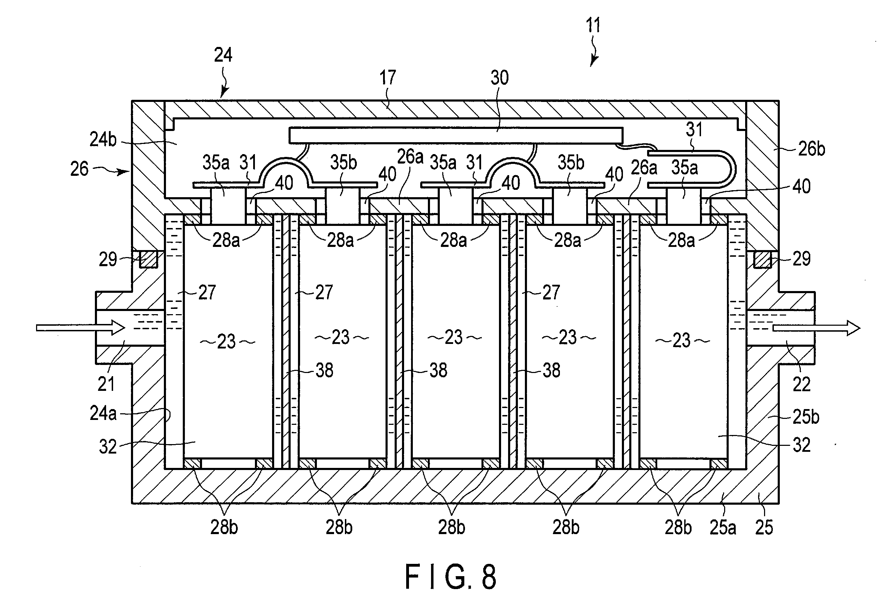

Next, a fourth embodiment is described. FIG. 8 is a cross-sectional view illustrating a secondary battery apparatus 11 according to the fourth embodiment.

The fourth embodiment differs from the first embodiment in that an insulation member is disposed between two neighboring battery cells 23 within the battery storing chamber 24a. In the fourth embodiment, the other structure of the secondary battery apparatus is the same as that of the secondary battery apparatus according to the first embodiment.

As illustrated in FIG. 8, an insulation member 38 is formed of an insulator in a rectangular plate shape. The insulation member 38 is disposed between two neighboring battery cells 23 within the battery storing chamber 24a, and faces the battery cells 23 with a predetermined gap. The insulation member 38 has a height which is substantially equal to the distance from the bottom surface of the body case 25 to the ceiling wall 26a of the upper case 26, has a width which is substantially equal to the width of the battery cell 23, and is formed to have a thickness which is less than the interval between the battery cells 23. The insulator, of which the insulation member 38 is formed, is not limited to a specific material.

Each insulation member 38 is disposed between the battery cells 23 by fixing its lower end edge to the bottom wall 25a of the body case 25 and fixing its upper end edge to the ceiling wall 26a of the upper case 26. In addition, each insulation member 38 is not in contact with the peripheral wall 25b of the body case 25 or the peripheral wall 26b of the upper case 26, and is opposed to, with a gap, to the peripheral wall 25b and peripheral wall 26b.

The liquid coolant 27, which is filled in the battery storing chamber 24a of the outer case 24, flows in the battery storing chamber 24a through gaps between the battery cells 23 and insulation members 38 and gaps between the insulation member 38 and the peripheral wall 25b, thereby cooling the battery cells 23.

According to the secondary battery apparatus 11 with the above-described structure, the neighboring battery cells 23 can surely be insulated by the insulation member 38. For example, when the battery cell 23 expands due to over-charge or the like, electrical contact between the battery cells 23 can be prevented by the insulation member 38. (Fifth Embodiment)

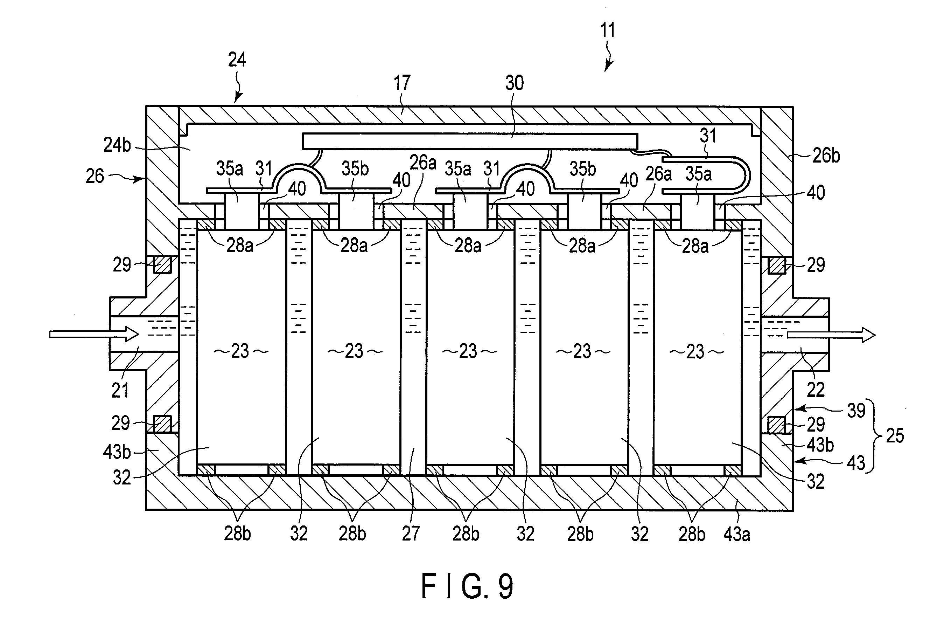

Next, a fifth embodiment is described. FIG. 9 is a cross-sectional view illustrating a secondary battery apparatus 11 according to the fifth embodiment.

The fifth embodiment differs from the first embodiment in that the outer case 24 is composed of three or more parts, namely a lower case 43, a middle case 39 and an upper case 26. Specifically, the case, which corresponds to the body case 25 of the first embodiment, is divided into the middle case 39 and lower case 43, and these cases are jointed to constitute the body case. In the fifth embodiment, the other structure of the secondary battery apparatus is the same as that of the secondary battery apparatus according to the first embodiment.

As illustrated in FIG. 9, the lower case 43 includes, as one piece, a rectangular bottom wall 43a and a rectangular frame-shaped peripheral wall 43b which is erectly provided around the bottom wall 43a. The bottom wall 43a is formed to have a size corresponding to a predetermined number of battery cells 23. The peripheral wall 43b has a height which is about 20% of the height of the battery cell 23.

The middle case 39 is formed in a rectangular frame shape with a size corresponding to the peripheral wall 43b of the lower case 43. The middle case 39 is formed to have a height which is about 70% of the height of the battery cell 23.

The upper end edge of the peripheral wall 43b of the lower case 43 and the lower end edge of the peripheral wall of the middle case 39 are abutted upon each other, and are airtightly adhered by the adhesive 29. In addition, the upper end edge of the peripheral wall of the middle case 39 and the lower end edge of the peripheral wall 26b of the upper case 26 are abutted upon each other, and are airtightly adhered by the adhesive 29. The airtight battery storing chamber 24a is formed by the lower case 43, the middle case 39, and the ceiling wall 26a and peripheral wall 26b of the upper case 26.

In addition, the coolant inlet 21 of the outer case 24 is formed on one end side of the peripheral wall of the middle case 39, and communicates with the battery storing chamber 24a. The coolant outlet 22 is formed in that peripheral wall of the middle case 39, which is located on the side opposite to the peripheral wall at which the coolant inlet 21 is disposed, and communicates with the battery storing chamber 24a.

According to the secondary battery apparatus 11 with the above-described structure, the outer case 24 is composed of the three parts, namely the upper case 26, middle case 39 and lower case 43. Thereby, the size of each structural member can be reduced, and the efficiency in manufacture and assembly can be improved.

### (Sixth Embodiment)

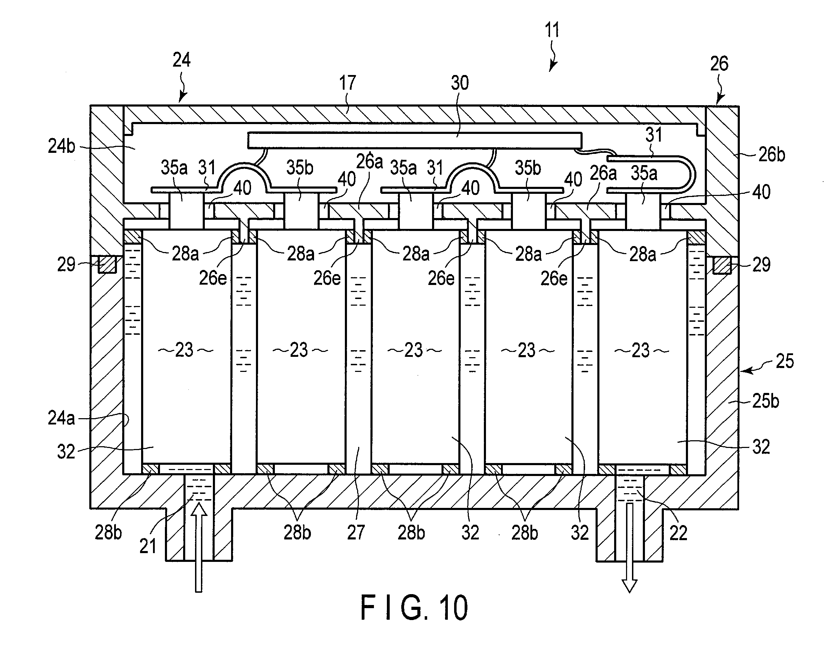

Next, a sixth embodiment is described. FIG. 10 is a cross-sectional view illustrating a secondary battery apparatus 11 according to the sixth embodiment.

The sixth embodiment differs from the first embodiment with respect to the point that the coolant inlet 21 and coolant outlet 22 are disposed at the bottom wall 25a of the body case 25, and with respect to the sealing structure between the battery cell 23 and the ceiling wall 26a of the upper case 26. In the sixth embodiment, the other structure of the secondary battery apparatus is the same as that of the secondary battery apparatus according to the first embodiment. In addition, since the sealing structure between the battery cell 23 and the ceiling wall 26a of the upper case 26 is the same as that of the secondary battery apparatus of the third embodiment, a detailed description thereof is omitted.

As illustrated in FIG. 10, in the sixth embodiment, the coolant inlet 21 is formed downward, on one end side of the bottom wall 25a, and communicates with the battery storing chamber 24a. The coolant outlet 22 is formed downward in that end portion of the bottom wall 25a, which is opposite to the side of the location where the coolant inlet 21 is disposed, and communicates with the battery storing chamber 24a.

The secondary battery apparatus 11 with the above-described structure can be used, for example, in the case where the liquid coolant 27 cannot be taken in or discharged from the peripheral wall side of the outer case, because of the presence of other members around the secondary battery apparatus 11, depending on the location of installation or the direction of installation.

### (Seventh Embodiment)

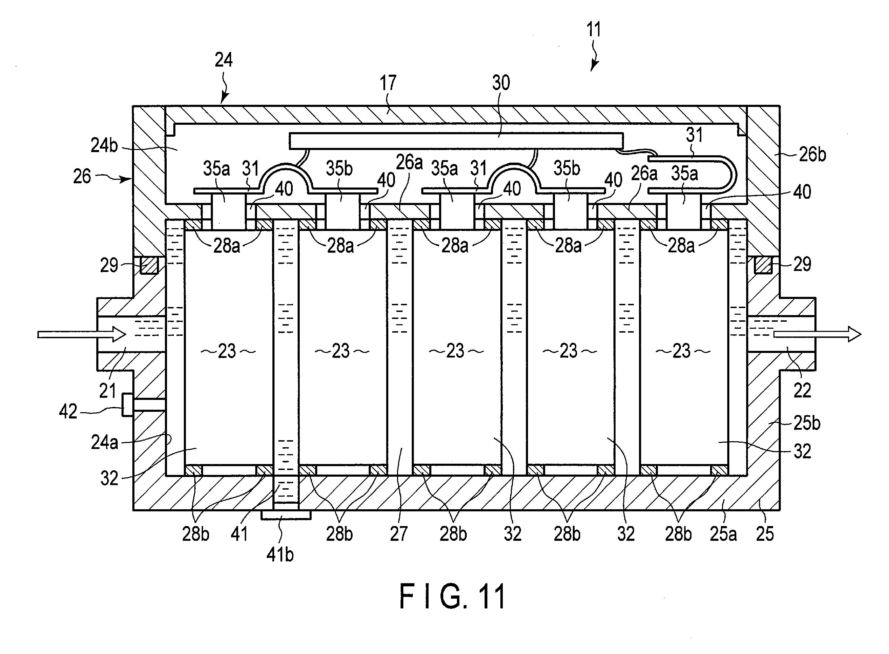

Next, a seventh embodiment is described. FIG. 11 is a cross-sectional view illustrating a secondary battery apparatus 11 according to the seventh embodiment.

The seventh embodiment differs from the first embodiment in that the secondary battery apparatus 11 includes a liquid coolant drain hole (drain) formed in the body case 25, and a pressure sensor. In the seventh embodiment, the other structure of the secondary battery apparatus is the same as that of the secondary battery apparatus according to the first embodiment.

The secondary battery apparatus 11 according to the seventh embodiment further includes an insulation oil drain 41 and a liquid pressure sensor 42.

As illustrated in FIG. 11, the liquid coolant drain hole (drain) 41 is formed in the bottom wall 25a of the body case 25, communicates with the battery storing chamber 24a, and is open to the outer surface of the body case 25. When maintenance, an inspection, repair, etc. of the secondary battery apparatus 11 are performed, the liquid coolant 27 in the battery storing chamber 24a can be exhausted to the outside from the liquid coolant drain 41. Usually, the liquid coolant drain 41 is closed by a detachable cap 41b.

The pressure sensor 42 is a sensor which measures a pressure acting on the liquid coolant 27 which is filled in the battery storing chamber 24a. This pressure sensor 42, for example, is embedded in the peripheral wall 25b of the body case 25, and a detection part thereof is in contact with the inside of the battery storing chamber 24a. The structure of the pressure sensor 42 is not limited to a specific structure.

The pressure sensor 42 sends measured pressure data of the liquid coolant 27 to the CMU 30 and the controller. The controller executes various processes, based on the pressure data of the liquid coolant 27. For example, if the controller determines that the pressure acting on the liquid coolant 27 has lowered below a predetermined pressure, the controller raises the pressure of the pump 12. Conversely, if the controller determines that the pressure of the liquid coolant 27 has increased above the predetermined pressure, the controller lowers the pressure of the pump 12. In addition, if the pressure of the liquid coolant 27 in the battery storing chamber 24a has excessively increased, the controller can also stop the liquid feed of the pump 12.

According to the secondary battery apparatus 11 with the above-described structure, the internal liquid coolant 27 can easily be completely drained where necessary. In addition, by detecting the pressure of the liquid coolant, the liquid coolant circulation operation can properly be controlled in accordance with the detected pressure. Incidentally, the secondary battery apparatus 11 may include a temperature sensor which detects the temperature of the liquid coolant 27 in the battery storing chamber 24a. By controlling the operations of the pump, radiator and air blower in accordance with the temperature of the liquid coolant 27, which was detected by the temperature sensor, the battery cells can be cooled more stably.

Besides, in the secondary battery apparatuses according to the above-described second to seventh embodiments, the same advantageous effects as in the first embodiment can be obtained.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. For example, in the secondary battery apparatus, the number of battery cells is not limited to the above-described embodiments, and may be increased or decreased, where necessary.

For example, the secondary battery apparatuses can be connected in parallel with the circulation mechanism of the secondary battery system, or may be connected in a combination of serial connection and parallel connection. Alternatively, the battery cells may be disposed in the battery storing chamber such that the major surfaces of the outer containers of the battery cells are parallel to the coolant inlet and outlet.

## Claims

1. A secondary battery apparatus comprising:
an outer case including an airtight battery storing chamber formed inside, a coolant inlet for supplying an insulative liquid coolant to the battery storing chamber, and a coolant outlet for discharging the liquid coolant from the battery storing chamber; and
a battery cell including an electrode terminal, the battery cell being disposed in the battery storing chamber of the outer case and immersed in the liquid coolant filled in the battery storing chamber.

2. The secondary battery apparatus of Claim 1, wherein the battery cell includes a container which contains an electrode body, and an electrode terminal projecting from the container and connected to the electrode body,
the outer case includes a conductor disposition chamber airtightly partitioned from the battery storing chamber,
the container of the battery cell is immersed in the liquid coolant in the battery storing chamber, and
the electrode terminal projects into the conductor disposition chamber and is airtightly sealed from the battery storing chamber.

3. The secondary battery apparatus of Claim 2, wherein the outer case includes a ceiling wall for partition between the battery storing chamber and the conductor disposition chamber, and a plurality of openings which are formed in the ceiling wall and through which the electrode terminals are passed, and
airtight sealing is effected between the battery cell and the openings by a sealant.

4. The secondary battery apparatus of Claim 3, wherein the outer case comprises:
a body case including a bottom wall, a frame-shaped peripheral wall erectly provided along side edges of the bottom wall, and an upper opening; and
an upper case including the ceiling wall opposed to the bottom wall, and a frame-shaped peripheral wall provided around the ceiling wall,
wherein the peripheral wall of the upper case is airtightly jointed to the peripheral wall of the body case, and the battery storing chamber is formed by the bottom wall and the peripheral wall of the body case, and the ceiling wall and a part of the peripheral wall of the upper case.

5. The secondary battery apparatus of Claim 4, wherein the peripheral wall of the upper case and the peripheral wall of the body case are jointed to each other by an adhesive, and a jointing part is airtightly sealed by the adhesive.

6. The secondary battery apparatus of Claim 4, wherein the peripheral wall of the upper case and the peripheral wall of the body case are jointed, and an O-ring is interposed at a jointing part between the peripheral wall of the upper case and the peripheral wall of the body case.

7. The secondary battery apparatus of any one of Claim 4 to Claim 6, wherein the coolant inlet is formed in the peripheral wall of the body case and communicates with the battery storing chamber, and
the coolant outlet is formed in the peripheral wall of the body case on a side opposite to the coolant inlet, with the battery storing chamber being interposed, and communicates with the battery storing chamber.

8. The secondary battery apparatus of any one of Claim 4 to Claim 6, wherein the coolant inlet is formed in the bottom wall of the body case and communicates with the battery storing chamber, and
the coolant outlet is formed in the bottom wall of the body case at a position apart from the coolant inlet, and communicates with the battery storing chamber.

9. The secondary battery apparatus of any one of Claim 1 to Claim 6, further comprising:
a plurality of the battery cells disposed in the battery storing chamber; and
an insulation member disposed with a gap between two neighboring battery cells in the battery storing chamber.

10. The secondary battery apparatus of any one of Claim 1 to Claim 6, wherein the outer case includes a liquid coolant drain which is formed in the bottom wall and communicates with the battery storing chamber.

11. The secondary battery apparatus of any one of Claim 1 to Claim 6, further comprising a pressure sensor which is disposed on the outer case and detects a pressure of the liquid coolant in the battery storing chamber.

12. A secondary battery system comprising:
the secondary battery apparatus of any one of Claim 1 to Claim 6; and
a circulation mechanism configured to circulate an insulative liquid coolant through the battery storing chamber of the second battery apparatus.

13. The secondary battery system of Claim 12, wherein the circulation mechanism includes a piping connected to the coolant inlet and the coolant outlet of the secondary battery apparatus, a pump configured to feed the liquid coolant from the coolant inlet into the battery storing chamber through the piping and to take in the liquid coolant which is discharged from the coolant outlet, and a radiator which is connected to the piping between the coolant outlet and the pump and cools the liquid coolant discharged from the battery storing chamber.
